# EUROPEAN PATENT APPLICATION

(11) **EP 2 017 133 A1**
(43) Date of publication of application: **21.01.2009**
(21) Application number: 07425461.6
(22) Date of filing: 25.07.2007
(51) Int. Cl.: B60R 13/00

(54) **Plate for symbol, in particular for airbag housing wall**

(30) Priority: 20.07.2007 IT BS20070102
(71) Applicant: Lupini Targhe S.p.A., 24040 Pognano (Bergamo) (IT)
(72) Inventor: Capuzzi, Angiolino, 25020 Dello (Brescia) (IT)
(74) Representative: Crippa, Paolo Ernesto

(57) **Abstract**

The object of the present invention is a plate (1) for symbol, in particular for the wall of an airbag housing, comprises a support (2), a sheet (16) and a stopping ring (40), arranged about the sheet (16) so that the symbol is visible from the opening and held to the support. The ring (40) overlaps the stopping edge (20) of the sheet (16) for keeping it separate from the support (2), preventing the onset of galvanic corrosion phenomena. Moreover, the ring makes a seal against humidity, against the infiltrations inside the plate.

## Description

The object of the present invention is a plate showing a symbol, for example of a car company, in particular suitable for being arranged on the wall of the airbag housing of a motor vehicle, for example on the steering wheel.

Several solutions of plates for airbag housing exist, generally comprised of a support built in the wall, wherein a thin sheet showing the symbol of the car company is arranged.

From the aesthetic standpoint, the appearance of the plate is very important. In fact, it has immediate impact on the driver, or on the customer interested in the purchase, when sitting at the driving seat, as it is arranged in the middle of the steering wheel.

For this reason, the support wherein the sheet is seated is often made of a metal material or coated with a metal material. The sheet itself is also made of metal material, to impart a typical brightness to the symbol.

It is well known that a highly humid atmosphere creates in the motor vehicle compartment due to the guests' normal breathing; humidity, in contact with cold walls of the compartment, like those of the plate are, condensates forming a frost that seeps between the components thereof.

The phenomenon is at the basis of a galvanic corrosion that, as time goes by, becomes increasingly evident, thus damaging the sheet or the support. To the customer's eye, such details give a feeling of negligence of the car company, leading to the feeling of poor attention to details.

The object of the present invention is to obtain a plate for symbol for the wall of the airbag housing of a vehicle which should overcome the disadvantages mentioned above with reference to the prior art.

Such object is achieved by a plate obtained in accordance with the following claim 1. The dependent claims describe embodiment variations.

The features and advantages of the plate according to the present invention will appear more clearly from the following description, made by way of an indicative and non-limiting example with reference to the annexed figures, wherein:

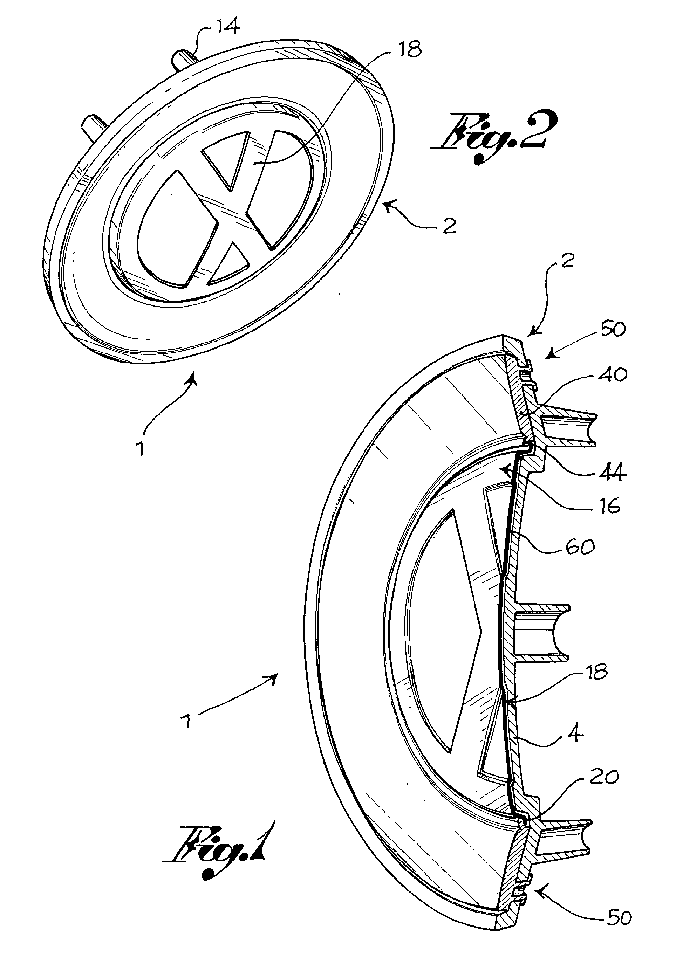

- figure 1 shows a partly cut-away perspective view of a plate according to the present invention;

- figure 2 shows the plate of figure 1;

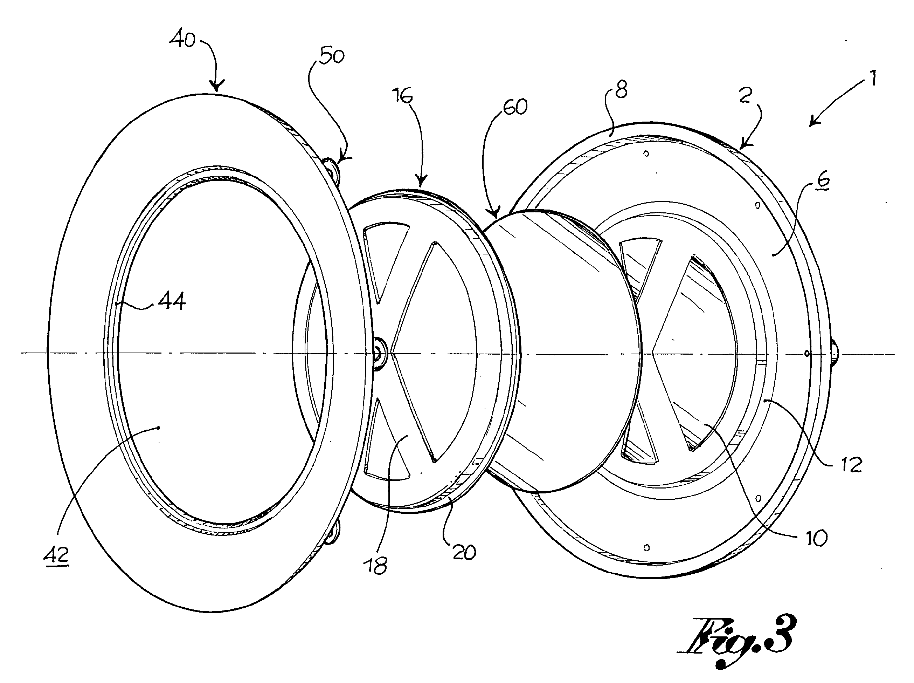

- figure 3 shows an exploded view of the plate of figure 2, according to a first viewing direction; and

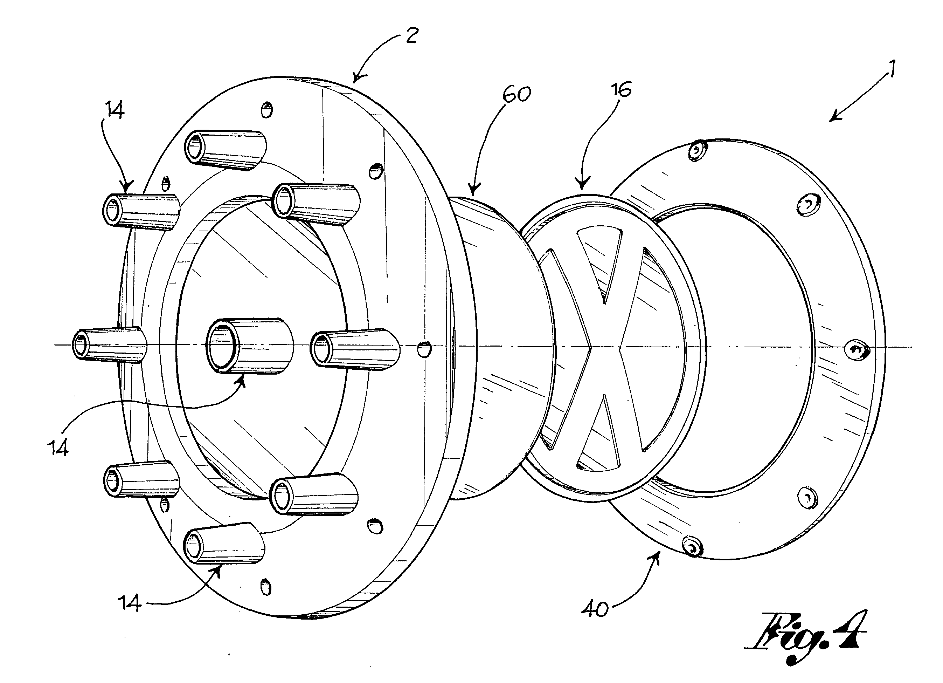

- figure 4 shows the plate of figure 3, according to a further viewing direction.

With reference to the annexed figures, reference numeral 1 globally denotes a plate for symbol for the wall of the airbag housing of a vehicle.

Plate 1 comprises a support 2 that develops about a support axis X, and exhibits an inner face 4, intended for facing the containment wall, and an outer face, opposite the inner one.

On the outer face side, support 2 exhibits a seating space 6, with annular pattern.

In other words, support 2, with discoid shape, comprises a support body, wherefrom an annular containment wall 8 axially projects along the outer peripheral edge.

Preferably, moreover, an island 10, having a side wall 12 radially spaced from the containment wall 8, axially projects on the same side as containment wall 8, but in central position.

Space 6 is defined between the side wall 12 of island 10 and the containment wall 8.

According to a preferred embodiment, support 2 comprises a plurality of engagement protrusions 14, for example tubular, axially projecting from the inner face of support 2 and suitable for attaching plate 1 to the containment wall of the airbag housing.

For example, the engagement protrusions 14 exhibit a truncated-cone shape that grows thin away from the support base they project from and are arranged along an imaginary circumference concentric to the recess corresponding to island 10.

According to a preferred embodiment, moreover, a protrusion 14 is cylindrical circular and is arranged at the centre of the imaginary circumference defined by the other semi-conical protrusions.

Preferably, support 2 is made so as to exhibit a metal material on the surface; for example, the support is made of a chromium-plated plastic material.

Moreover, plate 1 comprises a sheet 16, partially seated in space 6 of support 2, comprising a sheet body 18, carrying the symbol on the outer surface, and a stopping edge 20, radially projecting externally from the sheet body 18.

While the sheet body 18, of cylindrical shape, covers island 10 of support 2, also along the side wall 12 thereof, the stopping edge 20 is arranged at the foot of island 10, that is, at the bottom of space 6, about island 10 itself.

Preferably, sheet 16 is made so as to have a metal material on the surface; for example, the sheet is made of aluminium or alloys thereof.

Moreover, plate 1 comprises a stopping ring 40, having a central opening 42, seated in space 6 of support 2.

Ring 40 is arranged about sheet 16 so that the symbol shown thereon is visible through opening 42.

For example, the symbol of sheet 16, obtained in relief on the surface thereof, surfaces from opening 42 of ring 40.

Preferably, ring 40 exhibits such dimensions that the outer annular surface thereof contacts the inner annular wall of the containment wall 8 of support 2.

Ring 40 overlaps the stopping edge 20 of sheet 16 for holding the sheet to the support.

In particular, ring 40 comprises a lip 44, internally projecting radially from the edge of the central opening 42, which overlaps the stopping edge 20 of sheet 16.

In turn, ring 40 is mechanically held to support 2, for example by holding means suitable for mechanically engaging with the base of support 2 for holding ring 40 to support 2.

For example, the holding means comprise at least one coupling foot 50, axially protruding from the inner surface of ring 40, engaged in respective through holes obtained in the base of support 2.

Preferably, support 40 is made of an electrically insulating material, for example plastic material, for example soft, for example a mixture of polycarbonate and ABS, or the like.

Moreover, according to a preferred embodiment, the plate comprises a two-faced adhesive film 60, arranged between sheet 16 and support 2, in particular on top of island 10, for attaching sheet 16 to support 2.

Innovatively, the plate according to the present invention prevents the onset of galvanic corrosion phenomena when the support is separate from the sheet, that is, have no common contact points.

Advantageously, moreover, the plate strongly limits the infiltration of humidity therein.

In particular, the ring sealingly abuts on the containment wall 8 of space 6 and with the stopping edge 20 of sheet 16.

According to an even further advantageous aspect, the plate prevents the relief symbol from being squashed or deformed.

It is clear that a man skilled in the art can make changes and variations to the plate described above, all falling within the scope of protection defined in the following claims.

## Claims

1. Plate (1) for symbol, in particular for the wall of an airbag housing, comprising:
- a support (2) having a support axis (X), an inner face (4), intended for facing the wall of the airbag housing, and an outer face, wherein the support exhibits a seating space (6) on the side of the outer face;
- a sheet (16), partially seated in the space (6) of the support 2, comprising a sheet body (18), carrying the symbol on the outer surface, and a stopping edge (20), radially projecting externally from the sheet body (18);
wherein the plate further comprises a stopping ring (40), having an opening (42), seated in the space (6) of the support (2), arranged about the sheet (16) so that the symbol is visible from the opening, mechanically held to the support,
and wherein the ring (40) overlaps the stopping edge (20) of the sheet (16) for keeping it separate from the support.

2. Plate according to claim 1,
wherein the ring comprises a lip (44) internally projecting radially from the edge of the opening (42) and
wherein said lip (44) overlaps the stopping edge (20) of the sheet.

3. Plate according to claim 1 or 2, wherein
the sheet body (18) axially projects from the stopping edge, and
the support base comprises an island (10) projecting from the bottom of the space (6), about which the stopping edge (20) arranges and whereon the sheet body (18) arranges.

4. Plate according to any one of the previous claims, wherein the ring comprises holding means suitable for mechanically engaging with the support for holding the ring to the support.

5. Plate according to claim 4, wherein the holding means comprise at least one coupling foot (50), axially protruding from the inner surface of the ring, engageable in respective through holes obtained in the support.

6. Plate according to any one of the previous claims, wherein the support comprises a plurality of engagement protrusions (14), axially projecting from the inner face of the support, suitable for attaching the plate to the containment wall.

7. Plate according to any one of the previous claims, comprising a two-faced adhesive film (60), arranged between the sheet and the support, for attaching the sheet to the support.

8. Plate according to any one of the previous claims, wherein the support exhibits at least superficially a metal material.

9. Plate according to claim 8, wherein the support is made of superficially chromium-plated plastic material.

10. Plate according to any one of the previous claims, wherein the sheet exhibits at least superficially a metal material.

11. Plate according to claim 9, wherein the sheet is made of aluminium or alloys thereof.

12. Plate according to any one of the previous claims, wherein the ring is made of an electrically insulating material.

13. Plate according to claim 12, wherein the ring is made of plastic material.

14. Plate according to claim 13, wherein the plastic material is a mixture of polycarbonate and ABS.

15. Plate according to any one of the previous claims, wherein the support comprises an annular axially projecting containment wall (8), which peripherally delimits the space (6), and wherein the ring is sized for having the outer side surface in contact with the inner side surface of the containment wall (8) for making a seal.

16. Plate according to any one of the previous claims, wherein the ring holds the sheet to the support.

17. Plate according to any one of the previous claims, wherein the ring sealingly rests on the stopping edge (20) of the sheet.
